# EUROPÄISCHE PATENTANMELDUNG

(11) **EP 1 890 412 A1**
(43) Veröffentlichungstag der Anmeldung: **20.02.2008**
(21) Anmeldenummer: 06017051.1
(22) Anmeldetag: 16.08.2006
(51) Int. Cl.: H04L 1/00

(54) **Verfahren zum Signalisieren des Auftretens oder der Lage eines Steuerdatums in einer Bitfolge und Vorrichtungen**

(71) Anmelder: Nokia Siemens Networks GmbH & Co. KG, 81541 München (DE)
(72) Erfinder: Raaf, Bernhard, 82061 Neuried (DE)

(57) **Zusammenfassung**

Erläutert wird unter anderem ein Verfahren, bei dem eine Bitfolge (BF1) übertragen wird, die ein Formatdatum (F1) enthält. Das Formatdatum (F1) hat einen ersten Wert, der angibt, dass die erste Bitfolge (BF1) ein erstes Steuerdatum (ACK) enthält.

## Beschreibung

Die Erfindung betrifft ein Verfahren zum Signalisieren des Auftretens oder der Lage eines Steuerdatums in einer Bitfolge. Das Steuerdatum dient zum Erbringen einer Steuerfunktion, insbesondere bezüglich einer Bitübertragungsschicht.

Die Bitfolge ist beispielsweise eine Bitfolge, die im Rahmen eines Zeitmultiplexverfahrens übertragen wird. Solche Zeitrahmenstrukturen werden beispielsweise verwendet bei:
- UMTS (Universal Mobile Telecommunications System), insbesondere gemäß dessen Release 99, 3, 4 bzw. 5,
- gemäß einem erweiterten UMTS-Standard, beispielsweise gemäß E-UTRA (Evolved UTRA, 3 GPP TR 25.814 V1.3.2 (2006-5)),
- GSM (Groupe Spéciale Mobile oder Global System for Mobile Communication),
- DECT (Digital Enhanced (früher: European) Cordless Telecommunication), oder
- WiMAX (Worldwide interoperability for Microwave Access)

Es ist Aufgabe der Erfindung ein einfaches Verfahren zum Signalisieren des Auftretens oder der Lage eines Steuerdatums in einer Bitfolge anzugeben. Außerdem sollen zugehörige Vorrichtungen angegeben werden.

Diese Aufgabe wird durch ein Verfahren mit den im Patentanspruch 1 angegebenen Schritten gelöst. Weiterbildungen sind in den Unteransprüchen angegeben.

Die Erfindung geht von der Überlegung aus, dass man Datenübertragungsverfahren entwickeln könnte, die ohne Signalisierung der Lage eines Steuerdatums auskommen, weil die Steuerdaten bspw. in jedem Zeitrahmen oder Zeitschlitz zur Übertragung der Bitfolgen auf die gleiche Art und Weise angeordnet sind bzw. nach einem vorgegebenen Wiederholungsmuster auf verschiedene Art in verschiedenen Zeitrahmen. Nachteilig wäre dann jedoch beispielsweise ein schlechtes Leistungsverhältnis PAPR (Peak to Average Power Ratio) bzw. dass die Datenübertragungskapazität schlecht ausgenutzt wird, wenn ein bestimmtes Steuerdatum momentan nicht benötigt wird. Auch wenn mehrere Steuerdaten parallel zueinander gesendet werden, was bei einigen Zugriffsverfahren, wie z. B. CDM (Code Division Multiplex) oder OFDM (Orthogonal Frequency Division Multiplex), möglich ist, verschlechtert das das PAPR, da bei einer parallelen also gleichzeitigen Übertragung eine konstruktive oder destruktive Überlagerung der Signale auftreten kann.

Deshalb werden bei dem erfindungsgemäßen Verfahren die folgenden Verfahrensschritte ausgeführt:
- Senden einer ersten Bitfolge, die ein erstes Formatdatum mit einem ersten Wert enthält, der angibt, dass oder wo die erste Bitfolge ein erstes Steuerdatum enthält, und
- Senden des ersten Steuerdatums in der ersten Bitfolge,
- Empfangen der ersten Bitfolge in einer zweiten Vorrichtung,
- Lesen des Formatdatums in der empfangenen Bitfolge,
- abhängig von dem Formatdatum bzw. dessen Wert Lesen des ersten Steuerdatums, insbesondere durch Ermitteln des Auftretens oder der Lage des ersten Steuerdatums abhängig vom Wert des Formatdatums,
- Erbringen einer Steuerfunktion in der zweiten Vorrichtung abhängig von dem Wert des Steuerdatums.

Durch diese Maßnahme wird erreicht, dass die Lage von Steuerdaten in der Bitfolge auf einfache Art sehr schnell und sehr effektiv geändert werden kann. So kann insbesondere von Zeitrahmen (TTI - Time Transmission Interval) zu unmittelbar folgendem Zeitrahmen (TTI) das Format geändert werden, wobei bspw. die Uplinkrichtung, die Downlinkrichtung oder ein empfangener Zeitrahmen und der nächst gesendete Zeitrahmen betrachtet werden. Auch sind sogar Formatänderungen von Zeitschlitz zu unmittelbar folgenden Zeitschlitz bspw. auch innerhalb eines Zeitrahmens möglich, wiederum für beide Übertragungsrichtungen oder auch bezogen auf empfangene und gesendete Zeitschlitze. Es ist lediglich erforderlich, den Wert des Formatdatums zu ändern. Die Änderung ist deshalb so schnell möglich, weil das Formatdatum in der gleichen Bitfolge bzw. im gleichen Zeitrahmen übertragen wird wie das Steuerdatum, dessen Lage im Formatdatum angegeben ist.

Eine Steuerfunktion unterscheidet sich insbesondere von einer Funktion, mit der Nutzdaten übertragen werden, wie Musikdaten, Sprachdaten, Programmdaten oder Daten für einen Internetzugriff. Bevorzugt betrifft die Steuerfunktion eine Funktion einer sogenannten physikalischen Schicht oder Bitübertragungsschicht gemäß einem Schichtenprotokoll, das mehrere Protokollschichten enthält, vergl. z. B. OSI-Schichtenmodell (Open System Interconnection).

Bei einer Ausführungsform wird die Lage des Steuerdatums anhand des Werts des Formatdatums mit Hilfe einer Tabelle in einem Lookupverfahren oder aber über eine Schaltungsanordnung ohne Verwendung eines Programms ermittelt. Bei anderen Ausführungsformen wird die Lage des Steuerdatums auf eine andere Art und Weise aus dem Wert des Formatdatums ermittelt, bspw. gibt dann der Wert des Formatdatums Bitpositionen direkt an, an denen das Steuerdatum liegt, z. B. über Startposition und Länge, über Startposition und Endposition, nur über eine Startposition bei bekannter Länge, usw.

Bei einer Weiterbildung des erfindungsgemäßen Verfahrens wird der Schritt ausgeführt:
- mit der ersten Vorrichtung Senden einer zweiten Bitfolge, die ein Formatdatum mit einem zweiten Wert enthält, der angibt, dass in der zweiten Bitfolge bezüglich der Steuerfunktion kein weiteres Datum enthalten ist. Vorzugsweise befindet sich das Formatdatum in der zweiten Bitfolge an der gleichen Position, an der sich das erste Formatdatum in der ersten Bitfolge befunden hat. Auf diese Art und Weise lässt sich das Formatdatum auf einfache Art und Weise in den Bitfolgen finden. Jedoch kann auch nach einem vorgegebenen Verfahren die Lage bzw. Länge des Formatdatums in aufeinander folgenden Zeitrahmen geändert werden.

Somit betreffen beide Formatdaten dieselbe Steuerfunktion. Durch die Weiterbildung wird erreicht, dass nicht in jeder Bitfolge ein Steuerdatum angegeben werden muss, dass die Steuerfunktion betrifft. Mit anderen Worten wird ein Steuerkanal nur dann verwendet, wenn er tatsächlich erforderlich ist, beispielsweise weil sich eine Situation geändert hat.

Bei einer nächsten Weiterbildung des erfindungsgemäßen Verfahrens, insbesondere der zuvor erwähnten Weiterbildung, sind folgende Steuerfunktionen betroffen:
- eine Bestätigungsfunktion, die den Empfang eines Datenpaketes in der ersten Vorrichtung bestätigt durch Senden des Steuerdatums. Beispielsweise lassen sich mehrere Abstufungen der Bestätigung verwenden, beispielsweise in einem Steuerdatum, das mehr als ein Bit enthält. Dies wird auch ACK/NACK (Acknowledge, Not Acknowledge = Bestätigung, NichtBestätigung) genannt. Mehrere Abstufungen der Bestätigung werden auch als Soft-Acknowledgement bezeichnet, z. B. könnte wie folgt abgestuft werden:
   - Bestätigung,
   - Nichtbetätigung1, woraufhin mit etwas mehr Information, z. B. Redundanz, Sendeleistung usw. die Übertragung der zu bestätigenden Daten wiederholt wird im Vergleich zu der vorherigen Übertragung,
   - Nichtbestätigung2, woraufhin mit erheblich mehr Information, z. B. Redundanz, Sendeleistung usw. die Übertragung der zu bestätigenden Daten wiederholt wird im Vergleich zu der vorherigen Übertragung.
- Der Zugriff auf Nutzdaten abhängig vom Steuerdatum, beispielsweise unter Verwendung eines sogenannten TFCI (Transport Formate Combination Identifier) wie er bei UMTS verwendet wird. Somit entsteht eine hierarchische Kennzeichenstruktur für voneinander verschiedene Protokollschichten. Auch hierarchische Kennzeichenstrukturen bzgl. einer Protokollschicht, insbesondere bzgl. der Bitübertragungsschicht werden verwendet.
- Die Übertragung zusätzlicher Pilotdaten, die zusätzlich zu weiteren Pilotdaten in der Bitfolge übertragen werden. Die Pilotdaten sind dabei Daten, die dazu dienen, eine Kanalschätzung durchzuführen, um damit eine Entzerrung der empfangenen Bitfolge durchzuführen zu können.
- Eine Auswahl eines Übertragungsverfahrens abhängig von Empfangsqualitätsdaten, die in der Bitfolge enthalten sind und die die Empfangsqualität eines Signals angeben, das mit der ersten Vorrichtung empfangen worden ist, beispielsweise von der zweiten Vorrichtung. Das Steuerdatum wird in diesem Fall auch CQI (Channel Quality Indicator = Indikator der Kanal Qualität) genannt.

Allen genannten Beispielen ist gemeinsam, dass die betreffenden Steuerdaten nur von Zeit zu Zeit zu übertragen sind. Damit ist ein Steuerkanal nur dann erforderlich, wenn sich etwas geändert hat. Beispielsweise wenn der Empfang schlechter geworden ist, so dass neue Empfangsqualitätsdaten gesendet werden müssen. Ist der Empfang beispielsweise besser geworden, so müssen ebenfalls neue Empfangsqualitätsdaten gesendet werden. Außerdem ist es bspw. möglich, bei guten oder nur langsam veränderlichen Übertragungsbedingungen weniger Pilotdaten zu verwenden als bei schlechteren oder schnell veränderlichen Übertragungsbedingungen.

Bei einer anderen Weiterbildung enthält das Verfahren den folgenden Schritt:
- mit der ersten Vorrichtung Senden einer zweiten Bitfolge, die ein Formatdatum mit einem zweiten Wert enthält, der angibt, dass in der zweiten Bitfolge bezüglich derselben Steuerfunktion ein zweites Steuerdatum an einer anderen Lage als das erste Steuerdatum in der ersten Bitfolge enthalten ist. Damit betreffen beide Steuerdaten wieder dieselbe Steuerfunktion. Wiederum liegen beide Formatdaten vorzugsweise an der gleichen Position in den beiden Bitfolgen. Jedoch ist dies nicht zwingend, beispielsweise kann nach einem vorgegebenen Muster gewechselt werden.

"Andere Lage" bedeutet im Rahmen dieser Beschreibung insbesondere auch an der gleichen Bitposition, jedoch mit mehr oder weniger Bits in dem betreffenden Steuerdatum. Andererseits bedeutet "andere Lage" natürlich auch, an einer anderen Bitposition mit beispielsweise gleicher Bitlänge oder geänderter Bitlänge.

Bei einer nächsten Weiterbildung, insbesondere des Verfahrens, bei dem die Steuerdaten an einer anderen Lage liegen, betrifft die Steuerfunktion den Zugriff auf Nutzdaten. Ein Beispiel für eine solche Steuerfunktion ist die Verwendung eines sogenannten TFCI (Transport Format Composition Indicator = Indikator der Zusammensetzung der Transport Formate) im Rahmen eines UMTS-Verfahrens. Die Nutzdaten betreffen beispielsweise Sprachdaten, insbesondere Telefondaten, Kurznachrichtendaten (SMS - Short Message Service) oder Multimedianachrichten (MMS - Multi Media Service), die Datenübertragung, einen Internetzugriff oder E-Mail.

Bei einer nächsten Weiterbildung hat das erste Steuerdatum einen Wert, der eine erste Anordnung der Nutzdaten in der ersten Bitfolge angibt, beispielsweise sind nur Telefondaten enthalten. Das zweite Steuerdatum hat einen vom ersten Wert abweichenden Wert, der eine von der ersten Anordnung verschiedene Anordnung der Nutzdaten in der zweiten Bitfolge angibt. Beispielsweise sind in der zweiten Bitfolge in den Nutzdaten sowohl Telefondaten als auch andere Daten vorhanden. Auch kann ein Steuerdatum die Anordnung der Nutzdaten für mehrere Bitfolgen festlegen.

Bei einer Ausgestaltung gibt das Steuerdatum wieder zwei verschiedene Anordnungen von Nutzdaten vor. Jedoch beginnen die Nutzdaten an der gleichen Position in der ersten Bitfolge und der zweiten Bitfolge. Durch diese Maßnahme wird eine sehr sichere Übertragung gewährleistet, auch wenn beispielsweise die Übertragung des Steuerdatums fehlerhaft ist. Dies wird unten anhand der Ausführungsbeispiele näher erläutert.

Bei einer nächsten Weiterbildung betrifft die Steuerfunktion die Bearbeitung von Pilotdaten, wobei das Steuerdatum Pilotdaten enthält, die zur Entzerrung der ersten Bitfolge bzw. auf der zweiten Bitfolge in der zweiten Vorrichtung verwendet werden. Die Pilotdaten werden beispielsweise in jedem Zeitrahmen übermittelt. Weil die Pilotdaten im Empfänger bzw. in der zweiten Vorrichtung bekannt sind, lassen sie sich dazu verwenden, um eine Kanalimpulsantwort bzw. eine Kanalübertragungsfunktion zu ermitteln. Diese dienen dann bspw. dazu, Entzerrerkoeffizienten zu bestimmen, mit deren Hilfe sich der Einfluss des Übertragungskanals auf die Bitfolge wieder beseitigen lässt.

Bei einer Ausgestaltung hat das erste Formatdatum einen Wert, der eine erste Lage der Pilotdaten angibt. Das zweite Formatdatum hat einen Wert, der eine von der ersten Lage bezüglich der ersten Bitfolge verschiedene zweite Lage bezüglich der zweiten Bitfolge angibt. Vorzugsweise beginnen beide Pilotdaten an der gleichen Bitposition, enthalten jedoch weniger oder mehr Bits. Die Anzahl der erforderlichen Bits für Pilotdaten hängt von den Übertragungseigenschaften ab. Sind die Übertragungseigenschaften sehr gut oder ändern sich die Kanalparameter nur langsam, so sind nur wenige Pilotdaten erforderlich, um die Entzerrung durchzuführen. Die frei werdenden Bits können beispielsweise für die Übertragung von Nutzdaten genutzt werden bzw. werden genutzt. Ist die Übertragung dagegen stärker gestört oder ändern sich die Kanalparameter schnell, so sind mehr Pilotdaten erforderlich, um eine ausreichende Entzerrung durchzuführen. In diesem Fall werden gegebenenfalls weniger Nutzdaten übertragen bzw. es wird eine stärkere Komprimierung durchgeführt.

Bei einer anderen Weiterbildung des Verfahrens betrifft die Steuerfunktion das Festlegen von Übertragungsverfahren, wobei der Wert des Steuerdatums die Empfangsqualitäten der ersten Vorrichtung angibt. Beispielsweise ist das Steuerdatum ein sogenannter CQI-Wert (Channel Quality Identicator) wie er beispielsweise im Rahmen eines HSDPA-Verfahrens (High Speed Downlink Package Access) im Rahmen von UMTS verwendet wird. Auch bspw. das EUDCH-Verfahren (Enhanced Uplink Dedicated Channel) verwendet ein solches Steuerdatum.

Beispielsweise wird bei schlechteren Übertragungseigenschaften von einem 16-wertigem (4 Bit) QPSK (Quadrature Phased Shift Keying) zu einem 8-wertigem (3 Bit) PSK (Phased Shift Keying) oder zu einem 4 wertigem (2 Bit) QPSK-Verfahren (Quadratur Phased Shift Keying) gewechselt. Bei verbesserten Übertragungseigenschaften wird beispielsweise wieder zu dem ursprünglichen Verfahren gewechselt.

Bei einer nächsten Weiterbildung ist die erste Vorrichtung eine Mobilstation und die zweite Vorrichtung ist eine Basisstation. Alternativ ist die erste Vorrichtung eine Basisstation und die zweite Vorrichtung eine Mobilstation. Die Basisstation und die Mobilfunkstation werden bspw. in einem Mobilfunknetz eingesetzt, beispielsweise in einem UMTS-Netz oder in einem entsprechenden Netz, beispielsweise in USA bzw. Japan.

Bei einer nächsten Weiterbildung des erfindungsgemäßen Verfahrens enthält die erste Bitfolge Nutzdaten, insbesondere die oben erwähnten Nutzdaten. Die Steuerfunktion wird in der zweiten Vorrichtung erbracht, bevor die Nutzdaten decodiert werden. Damit kann die Steuerfunktion ohne Zeitverzögerung und sehr schnell erbracht werden. Nutzdaten sind üblicherweise mit Fehlercodierverfahren gesichert, die eine kleine Bitfehlerrate ermöglichen, die jedoch nur mit erhöhtem Rechenaufwand durchzuführen sind, wozu zusätzliche Zeit erforderlich ist. So kann bei einem sehr schnellen Erbringen der Steuerfunktion bereits die nächste gesendete Bitfolge in der zweiten Vorrichtung beeinflusst werden. Dies wäre nicht möglich, wenn erst die Nutzdaten decodiert werden müssten.

Bei einer anderen Weiterbildung des Verfahrens ist die erste Bitfolge in einem Zeitschlitz eines Zeitmultiplexrahmens enthalten. Die erste Bitfolge füllt den Zeitschlitz zu mindestens 90 Prozent. Der Zeitrahmen enthält bspw. eigene Synchronisationsbits. Beim UMTS ist der Zeitmultiplexrahmen ein sogenannter TTI (Transmission Time Intervall). Im UMTS sind Zeitrahmen von 10 ms (Millisekunden), 20 ms, 40 ms bzw. 80 ms vorgesehen. Diese Zeitrahmen können wiederum mehrere Zeitschlitze enthalten, beispielsweise 15 Zeitschlitze. In diesem Fall hätte ein Zeitschlitz bei einer Zeitrahmenlänge von 10 ms eine Zeitdauer von 667 Mikrosekunden.

Bei Weiterentwicklungen des UMTS-Standards haben die Zeitrahmen beispielsweise nur noch eine Dauer von 2 Millisekunden oder sogar nur noch von 0,5 Millisekunden oder kleiner. Auch in diesem Fall enthält jeder Zeitrahmen mehrere Zeitschlitze, in denen jeweils beispielsweise die Bitfolge übertragen wird. Es kann sich dabei auch um OFDM-Symbole handeln, z. B. wird je Zeitschlitz ein OFDM-Symbol übertragen oder es werden pro Zeitschlitz mehrere OFDM-Symbole übertragen.

Bei einer nächsten Weiterbildung wird die erste Bitfolge mit einem CDMA-Verfahren (Code Division Multiplex Access) und/oder mit einem OFDM-Verfahren (Orthogonal Frequency Division Multiplex) oder mit einem SC-FDMA-Verfahren (Single Carrier Frequency Division Multiple Access) übertragen. Diese Verfahren werden insbesondere im Rahmen von UMTS eingesetzt. Bei anderen Anwendungen werden jedoch auch andere Verfahren zum Übertragen der Bitfolgen verwendet.

Bei einer nächsten Weiterbildung der Erfindung wird das Formatdatum mit einer Bitfehlerrate im Bereich von 0,1 bis 0,001 übertragen und somit mit einer vergleichsweise hohen Bitfehlerrate. Jedoch ist diese Bitfehlerrate hinnehmbar, weil die auf der ersten Schicht arbeitenden Verfahren sehr robust sind. Insbesondere ist durch die Verwendung einer vergleichsweise hohen Fehlerrate gesichert, dass die Steuerdaten schnell gelesen und damit auch schnell bearbeitet werden.

Bei einer nächsten Weiterbildung enthält die erste Bitfolge eine erste Nutzdatenfolge. Die zweite Bitfolge enthält eine zweite Nutzdatenfolge. In der ersten Bitfolge liegt ein Abschnitt, d. h. bspw. eine oder mehrere fortlaufende Bitpositionen, der ersten Nutzdatenfolge in einer Lage, in der in der zweiten Bitfolge der gleiche Abschnitt der zweiten Nutzdatenfolge liegt. Bspw. liegt die Bitposition zwei der Nutzdatenfolgen jeweils an der gleichen Bitposition der Bitfolgen. Bei einer Variante liegt ein anderer Abschnitt der ersten Nutzdatenfolge in der ersten Bitfolge an einer anderen Lage als der gleiche Abschnitt der zweiten Nutzdatenfolge in der zweiten Bitfolge. Bspw. wird der Abschnitt in der zweiten Bitfolge im Vergleich zur ersten Bitfolge nach vorn oder nach hinten versetzt. Bei einer alternativen Variante enthält die zweite Nutzdatenfolge zusätzliche oder doppelt vorhandene Nutzdaten im Vergleich zu der ersten Nutzdatenfolge, wobei die zusätzlichen oder doppelt vorhandenen Nutzdaten oder ein Teil der zusätzlichen oder doppelt vorhandenen Nutzdaten in der zweiten Bitfolge vor dem genannten Abschnitt liegen, d. h. vor dem überlappenden und bezüglich der Bitpositionen übereinstimmenden Teil in beiden Bitfolgen.

Diese Weiterbildung, d. h. insbesondere auch beide Varianten lassen sich auch unabhängig von einem Formatdatum realisieren, so dass dann ein zweiter Aspekt der Erfindung vorliegt, der es ermöglicht Nutzdaten flexibel so zu übertragen, dass bspw. auch bei einer falschen "Leseformatierung" noch ein Großteil der Nutzdaten sicher gelesen werden kann, nämlich der Teil im überlappenden und bezüglich der Bitpositionen übereinstimmenden Teil in beiden Bitfolgen.

Die Erfindung betrifft außerdem eine Vorrichtung mit einer Steuereinheit und einer Sendeeinheit. Die Vorrichtung ist insbesondere ein Mobilfunkgerät oder eine Basisstation eines Mobilfunknetzes. Außerdem ist die Vorrichtung insbesondere zur Durchführung des erfindungsgemäßen Verfahrens oder einer seiner Weiterbildungen geeignet, so dass die oben genannten technischen Wirkungen auch für die Vorrichtung gelten.

Bei einer weiteren Vorrichtung enthält die Vorrichtung eine Empfangseinheit und eine Steuereinheit. Die Vorrichtung ist ebenfalls wiederum vorzugsweise ein Mobilfunkgerät oder eine Basisstation. Die weitere Vorrichtung dient wiederum zum Durchführen des erfindungsgemäßen Verfahrens oder einer seiner Weiterbildungen. Somit gelten die oben genannten technischen Wirkungen auch für diese Vorrichtung.

Auch eine Vorrichtung zur Durchführung des Verfahrens gemäß zweitem Aspekt wird geschützt.

Im Folgenden werden Ausführungsbeispiele der Erfindung anhand der beiliegenden Zeichnungen erläutert. Darin zeigen:
- Figur 1: ein Mobilfunknetz,
- Figuren 2 bis 4: das Format von Zeitrahmen, die in dem Mobilfunknetz übertragen werden,
- Figur 5: die Leistungsverteilung bei der Übertragung eines Zeitrahmens,
- Figur 6: einen Zeitrahmen für eine Datenübertragung in dem Mobilfunknetz gemäß einem weiteren Ausführungsbeispiel, und
- Figur 7 und 8: Zeitrahmen für eine Datenübertragung allgemein.

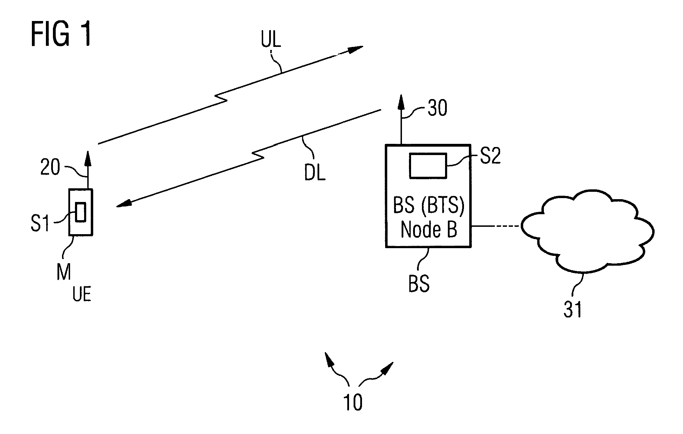

Figur 1 zeigt ein Mobilfunknetz 10, das auch als Mobilfunkdatenübertragungsnetz bzw. Mobilfunktelekommunikationsnetz bezeichnet werden kann. Das Mobilfunknetz 10 ist im Ausführungsbeispiel ein UMTS-Netz. Alternativ ist das Mobilfunknetz 10 ein Netz einer UMTS Nachfolgetechnologie oder ein Netz der 4-ten Generation.

Das Mobilfunknetz 10 enthält eine Vielzahl von Basisstationen, die im Fall von UMTS auch als Node B bezeichnet werden. Im Folgenden wird jedoch auch im Fall von UMTS als Basisstation BS gesprochen. Außerdem enthält das Mobilfunknetz eine Vielzahl von mobilen Endgeräten, die als Mobilfunkgerät M bzw. UE (User Equipment - Nutzergerät) bezeichnet werden, bspw. als Handy. In Figur 1 ist eine Basisstation BS und ein Mobilfunkgerät M dargestellt.

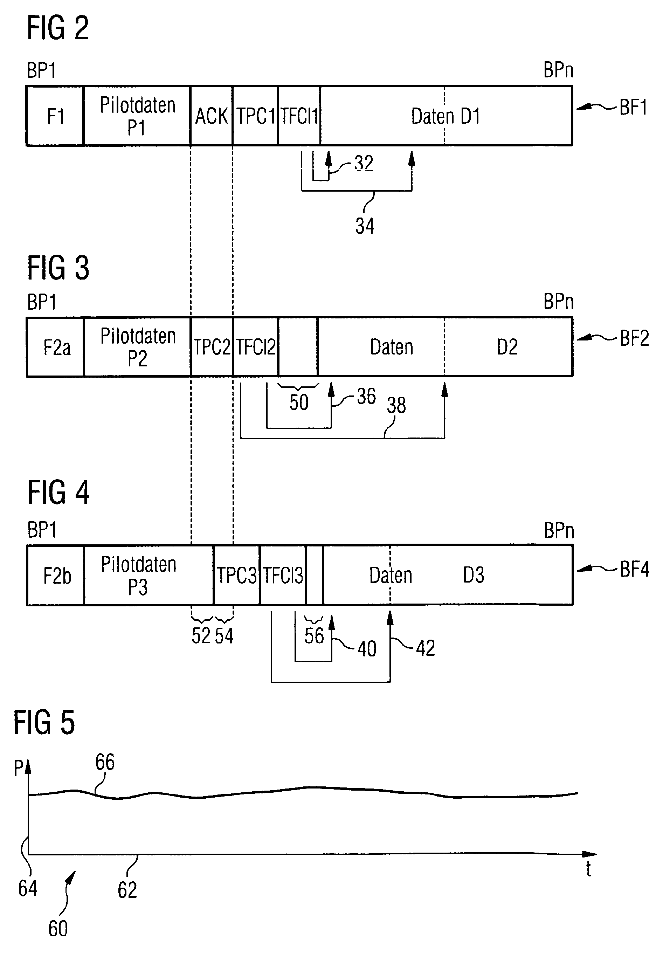

Das Mobilfunkgerät M enthält beispielsweise eine Antenne 20, die als Sendeantenne und auch als Empfangsantenne genutzt wird. Außerdem enthält das Mobilfunkgerät M eine Steuereinheit S1, die beispielsweise einen Mikroprozessor enthält oder nur eine Schaltung ohne Prozessor. Das Mobilfunkgerät M ist insbesondere geeignet, die unten anhand der Figuren 2 bis 8 erläuterten Bitfolgen zu erzeugen bzw. zu empfangen.

Die Basisstation BS enthält unter anderem eine Antenne 30, die als Sendeantenne und als Empfangsantenne genutzt wird. Außerdem enthält die Basisstation BS eine Steuereinheit S2, die einen oder mehrere Mikroprozessoren enthält bzw. eine Schaltungsanordnung, die ohne Programm arbeitet. Die Basisstation BS ist insbesondere in der Lage, die unten anhand der Figur 2 bis 8 erläuterten Bitfolgen zu empfangen und zu bearbeiten bzw. zusammenzustellen und zu senden.

von dem Mobilfunkgerät M zu der Basisstation BS gibt es eine sogenannte Uplink-Übertragungsrichtung UL. Außerdem gibt es eine sogenannte Downlink-Übertragungsrichtung DL, die von der Basisstation BS zu dem Mobilfunkgerät M gerichtet ist.

Die Datenübertragungskapazität auf dem Uplink UL und auf dem Downlink DL kann gleich sein oder voneinander verschieden, wobei in Downlinkrichtung oft ein Mehrfaches der Datenübertragungskapazität zur Verfügung steht als in Uplinkrichtung UL.

In Figur 1 ist außerdem eine Verbindung zu einem Datenübertragungsnetz 31 dargestellt, mit dem die Basisstation BS verbunden ist. Das Datenübertragungsnetz 31 dient zur Weiterleitung des Teilnehmerverkehrs sowie für Verwaltungs- und Administrationszwecke, die hier nicht weiter ausgeführt sind.

Figur 2 zeigt eine erste Bitfolge BF1, die Bitpositionen BP1 bis BPn enthält, beispielsweise enthält die Bitfolge BF1 10 bis 2000 Bits abhängig von der aktuellen Datenrate und ggf. abhängig von einer Datenkompression. Der Zeitrahmen hat bspw. eine Dauer von 10 Millisekunden, wobei ein Zeitschlitz, in dem die Bitfolge BF1 liegt, bspw. 667 Mikrosekunden dauert.

Alternativ ist die Bitfolge BF1 bspw. in einer Symbolfolge aus 5 bis 15 Symbolen enthalten, wobei jedes Symbol bspw. zwischen 2 Bit und 64 Bit repräsentiert, wie bspw. für OFDMA-Verfahren typisch. In diesem Fall hat ein Zeitrahmen bspw. eine Dauer von 0,5 Millisekunden, während ein Zeitschlitz für die Übertragung eines Symbols bspw. 71,4 Millisekunden beträgt, falls 7 Symbole je Zeitrahmen übertragen werden.

Im Ausführungsbeispiel befindet sich ein Formatdatum F1 an der am weitesten links liegenden Bitposition BP1 der Bitfolge. Das Formatdatum enthält im einfachsten Fall nur 1 Bit. Bevorzugt hat das Formatdatum F1 eine Länge, die kürzer als 5 Bits ist. Aufgrund der kurzen Bitlänge lässt sich das Formatdatum F1 sehr schnell und sehr einfach bearbeiten.

Dem Formatdatum F1 folgend sind in der Bitfolge BF1 bspw. Pilotdaten P1 angeordnet, beispielsweise 10 Bit Pilotdaten. Den Pilotdaten P1 folgt ein Bestätigungsdatum ACK, das beispielsweise nur 1 Bit, bevorzugt aber auch 2 oder mehr als 2 Bits enthält, z. B. weniger als 5 Bit. Dem Bestätigungsdatum ACK folgt bspw. ein Leistungsdatum TPC1 (Transmission Power Control), das eine Empfangsleistung angibt, mit der beispielsweise das Mobilfunkgerät M Signale von der Basisstation BS empfängt. Bspw. hat das Leistungsdatum TPC1 eine Länge von 2 Bit bis 5 Bit.

Dem Leistungsdatum TPC1 folgt ein Nutzdatenkennzeichen TFCI1 (Transport Formate Combination Identifier), das angibt, auf welche Art und Weise die Nutzdaten in einem Nutzdatenfeld D1 angeordnet sind, das sich an das Nutzdatenkennzeichen TFCI1 anschließt. Alternativ bezieht sich das Nutzdatenkennzeichen TFCI1 auch auf die Anordnung von Nutzdaten in mehreren aufeinander folgenden Bitfolgen, die bspw. in aufeinander folgenden Zeitrahmen übertragen werden. Das Nutzdatenkennzeichen TFCI1 hat abhängig von der Datenübertragungsrate bspw. eine Bitanzahl im Bereich von 2 Bits bis 16 Bit.

Im Ausführungsbeispiel verweist das Nutzdatenkennzeichen TFCI1 auf zwei Datentypen in dem Nutzdatenfeld D1, siehe Pfeile 32 und 34, wobei beiden Nutzdatentypen die gleiche Anzahl von Bits im Datenfeld D1 zugeordnet ist.

Somit gibt der Wert des Formatdatums F1 in der Bitfolge BF1 unter anderem an, dass die Bitfolge BF1 ein Bestätigungsdatum ACK enthält, das beispielsweise den Empfang eines Datenpaketes in der Mobilfunkstation M bestätigt. Aufgrund des Formatdatums F1 lässt sich auch die Lage der anderen Datenfelder ermitteln, d. h. Pilotdaten P1, TPC1, TFCI1.

Nach der Übertragung der Bitfolge BF1 überträgt die Mobilstation M beispielsweise die in Figur 3 dargestellte Bitfolge BF2 in einem Zeitschlitz. Die Bitfolge BF2 hat die gleiche Länge wie die Bitfolge BF1 und ebenfalls von links beginnend Bitpositionen BP1 bis BPn, wobei n eine natürliche Zahl ist. Im Ausführungsbeispiel hat ein Formatdatum F2a, das an der gleichen Position BP1 wie das Formatdatum F1 liegt, einen anderen Wert als das Formatdatum F1. Dieser andere Wert gibt an, dass in der Bitfolge BF2 kein Bestätigungsdatum ACK für die Bestätigungsfunktion enthalten ist. Somit enthält die Bitfolge BF2 anschließend an das Formatdatum F2a Pilotdaten P2, die zum Entzerren der empfangenen Bitfolge BF2 dienen. Direkt an die Pilotdaten P2 schließen sich Leistungsdaten TPC2 an, die wiederum die Empfangsleistung im Mobilfunkgerät M angeben. Direkt an die Leistungsdaten TPC2 schließt sich ein Nutzdatenkennzeichen TFCI2 an, das den gleichen Wert wie das Nutzdatenkennzeichen TFCI1 hat. Die Nutzdaten liegen im Ausführungsbeispiel in der Bitfolge BF2 an der gleichen Position wie die Nutzdaten D1 in der Bitfolge BF1. Aufgrund des gleichen Wertes der Nutzdatenkennzeichen TFCI1 und TFCI2 sind zwei verschiedene Typen von Nutzdaten in den Nutzdaten D2 enthalten, wobei beiden Nutzdatentypen die gleiche Anzahl von Bits zugeordnet ist, siehe Pfeil 36 und Pfeil 38. Zwischen dem Nutzdatenkennzeichen TFCI2 und den Nutzdaten D2 gibt es Bits 50, die ebenfalls für Nutzdaten genutzt werden können. Alternativ werden andere Steuerdaten oder Fülldaten an den Bitpositionen 50 übertragen.

Bei einem anderen Ausführungsbeispiel befinden sich die Nutzdaten direkt anschließend an das Nutzdatenkennzeichen TFCI2, wobei in der Bitfolge BF2 mehr Nutzdaten übertragen werden als in der Bitfolge BF1. In diesem Fall hat das Nutzdatenkennzeichen TFCI2 aber auch den gleichen Wert wie das Nutzdatenkennzeichen TFCI1. Bei einer anderen Alternative hat das Nutzdatenkennzeichen TFCI2 ebenfalls einen anderen Wert als das Nutzdatenkennzeichen TFCI1, so dass sie Nutzdaten D2 gemäß einem anderen Schema angeordnet sind als die Nutzdaten D1.

Figur 4 zeigt ein weiteres Ausführungsbeispiel für eine Bitfolge BF4, die beispielsweise vom Mobilfunkgerät M nach der Bitfolge BF1 gesendet wird. Die Bitfolge BF4 hat wiederum die gleiche Länge wie die Bitfolge BF1 und Bitpositionen beginnend von links BP1 bis BPn. Ein Formatdatum F2b hat die gleiche Länge wie das Formatdatum F1 bzw. F2a, jedoch einen anderen Wert als dieses Formatdatum F2a, F1. Aufgrund des anderen Wertes des Formatdatums F2b schließen sich direkt an das Formatdatum F2b in der Bitfolge BF4 mehr Pilotdaten P3 an, als in den Bitfolgen BF1 bzw. BF2. Beispielsweise schließen sich zwölf Pilotdaten P3 an. Aufgrund der veränderten Länge der Pilotdaten P3 verschiebt sich die Lage der folgenden Datenfelder. Direkt an die Pilotdaten P3 schließt sich ein Leistungsdatum TPC3 an, das wiederum die Empfangsfeldstärke betrifft. Direkt an das Leistungsdatum TPC3 schließt sich ein Nutzdatenkennzeichen TFCI3 an, das die Anordnung von Nutzdaten in einem Nutzdatenfeld D3 angibt. Gemäß Nutzdatenkennzeichen TFCI3 sind die Nutzdaten diesmal so strukturiert, dass ein erster Nutzdatentyp nur etwa ein Drittel des Nutzdatenfeldes D3 belegt, siehe Pfeil 40. Ein zweiter Nutzdatentyp belegt beispielsweise die übrigen Dreiviertel des Nutzdatenfeldes D3, siehe Pfeil 42. Die Nutzdaten D3 liegen wiederum an den gleichen Positionen wie die Nutzdaten D1 bzw. D2, so dass zwischen dem Nutzdatenkennzeichen TFCI3 und den Nutzdaten D3 Bitpositionen 56 liegen, die für andere Zwecke verwendet werden.

Wie in Figur 4 außerdem dargestellt ist, sind Bitpositionen 52 bzw. 54 für Pilotdaten P3 verwendet bzw. für Leistungsdaten TPC3 verwendet. In der Bitfolge BF1 waren diese Bitpositionen dem Bestätigungsdatum ACK zugeordnet. In der Bitfolge BF3 waren die Bitpositionen dem Leistungsdatum TPC2 zugeordnet.

Bei anderen Ausführungsbeispielen schließen sich die Nutzdaten D3 beispielsweise unmittelbar an das Nutzdatenkennzeichen TFCI3 an. Bei anderen Ausführungsbeispielen dient das Formatkennzeichen FI bspw. zur Angabe, ob die Bitfolge BF1 ein CQI-Datum enthält oder nicht. Das CQI-Datum hat eine Bitlänge die größer als zwei Bit ist. Das Benutzen des Formatkennzeichens ist besonders effektiv, wenn das durch das Formatkennzeichen FI angezeigte Datum sehr viel Bits enthält, bspw. mehr als fünf Bits. Insbesondere kann dieses Datum mehr Bits enthalten als das Formatkennzeichen FI. Die "eingesparten" Bitpositionen können für Nutzdatenübertragung genutzt werden.

Figur 5 zeigt ein Koordinatensystem 60, auf dessen x-Achse 62 die Zeit dargestellt ist, die für die Übertragung einer Bitfolge BF1 bzw. BF2 bzw. BF4 benötigt wird. Auf einer y-Achse 64 ist die Sendeleistung bzw. die Empfangsleistung beim Senden bzw. Empfangen der Bitfolge BF1 dargestellt. Wie ersichtlich ist, bleibt die Leistungskurve 66 und damit die Leistung etwa auf dem gleichen Wert, d.h. sie unterscheidet sich beispielsweise um weniger als 10 Prozent das sind 0,4 dB (Dezibel) vom Mittelwert. Eine solche Leistung lässt sich insbesondere deshalb erreichen, weil die Bitfolgen BF1 bis BF4 keine starre Zuordnung von Bitpositionen zu Steuerkanälen haben. Der gezeigte Leistungsverlauf 66 ermöglicht es, Sende-und Empfangseinheiten voll auszusteuern, da kein Rückhalt bzw. Backoff für temporär höhere Sendeleistungen eingeplant werden muss.

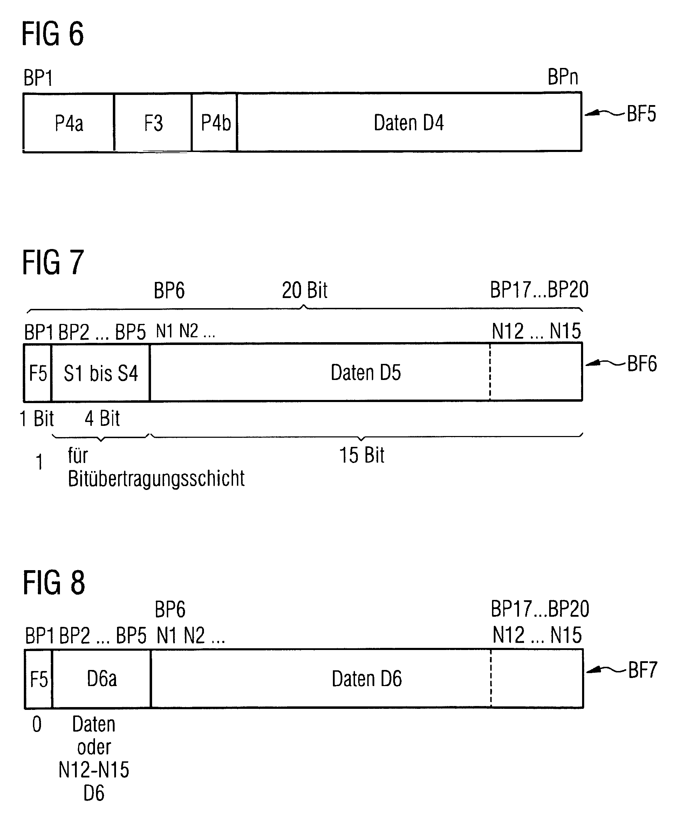

Figur 6 zeigt eine Bitfolge BF5, die beispielsweise eine andere Länge als die Bitfolgen BF1 usw. hat, siehe Bitpositionen BP1 bis BPm, wobei m eine natürliche Zahl ist. Die Bitfolge BF5 enthält zunächst einen Teil Pilotdaten P4a, die zur Entzerrung der Bitfolge BF5 verwendet werden. An die Pilotdaten P4a schließt sich ein Formatdatum F3 an, das die Anordnung der Pilotdaten P4a, weiterer Pilotdaten P4b und von Daten D4 in der Bitfolge BF5 durch seinen Wert angibt. Der zweite Teil der Pilotdaten P4b schließt sich an das Formatdatum F3 an. An die Pilotdaten P4b schließen sich die Nutzdaten D4 an. Die Bitfolge BF5 enthält beispielsweise kein Bestätigungsdatum und kein Nutzdatenkennzeichen TFCI. Die Pilotdaten P4a, P5 haben zusammen bspw. die gleiche Funktion wie die Pilotdaten P1, P2 bzw. P3.

Figuren 7 und 8 zeigen allgemein zwei Bitfolgen BF6, BF7 die jeweils beispielsweise 20 Bits enthalten. Das Bit an der linken Bitposition BP1 wird als Formatdatum F5 verwendet. Hat das Formatdatum F5 den Wert von beispielsweise 1, so werden die vier folgenden Bits für eine Bitübertragungsschicht als Steuerdaten S1 bis S4 verwendet. Die den Steuerdaten S1 bis S4 an der Bitposition BP6 der Bitfolge BF6 folgenden fünfzehn Bits an Bitpositionen BP6 bis BP20 der Bitfolge BF6 werden für fünfzehn Bits N1 bis N15 von Nutzdaten D5 verwendet, wobei Bitpositionen N1 bis N15 der Nutzdaten D5 eine Bitfolge angeben, die mit der Reihenfolge der Bits in den Nutzdaten D5 übereinstimmt. Hat dagegen das Formatdatum F5 einen anderen Wert, z. B. 0, so werden die folgenden vier Bits an Bitpositionen BP2 bis BP5 ebenfalls für die Übertragung von Nutzdaten D6a verwendet, ebenso wie die sich daran anschließenden fünfzehn Bits an Bitpositionen BP6 bis BP20. Die Art und Weise der Verteilung der Nutzdaten D6, D6a auf die 19 Datenfelder lässt sich auf verschiedene Weise wählen. Beispielsweise könnten beim Wert 0 des Formatdatums F5 19 Bit Nutzdaten beginnend mit Bitposition N1 nach dem Formatdatum F1 übertragen werden, d. h. an der Bitposition BP2 beginnend. Im Folgenden wird jedoch eine andere Variante näher erläutert; da diese andere Variante weitere Vorteile bietet.

Im Fall von fünfzehn Datenbits N1 bis N15 der Nutzdaten D5 werden die codierten Daten in der Datenrate so angepasst, dass sie genau in die verfügbaren fünfzehn Bitpositionen BP6 bis BP20 passen. Im Fall von 19 Datenbits werden die fünfzehn Datenbits N1 bis N15 an der gleichen Position BP6 bis BP20 der Bitfolge BF7 übertragen wie im Fall von fünfzehn Datenbit in der Bitfolge BF6. Außerdem werden vier Extrabits aus diesen Daten ausgewählt und an den Positionen BP2 bis BP5 in der Bitfolge BF7 übertragen, an denen zuvor, d. h. in der Bitfolge BF6 die vier Bit Steuerdaten S1 bis S4 für die Bitübertragungsschicht übertragen worden sind.

Nun können folgende Fälle eintreten:
- wenn das Formatdatum F5 den Wert 0 hat, aber irrtümlicherweise als Wert 1 decodiert wird, können die Daten decodiert werden unter Verwendung von fünfzehn Bit, obwohl mit einer etwas schlechteren Leistungsfähigkeit als wenn alle 19 Bits verwendet werden.
- Wenn das Formatdatum F5 den Wert 1 hat, aber irrtümlicherweise der Wert 0 decodiert wird, dann können die Daten ebenfalls noch decodiert werden, wobei 19 Bit verwendet werden, obwohl wiederum eine etwas geringere Leistungsfähigkeit vorhanden ist, weil nun vier der 19 Bits eigentlich physikalische Steuerdaten sind, d.h. sie haben zufällige Werte vom Standpunkt des Decodierens der Nutzdaten D5. Jedoch kann der Fehlerkorrekturcode noch in der Lage sein, die Daten richtig zu decodieren.

Typischerweise wird der Decoder in der Lage sein, eine Angabe zu schätzen, die die Genauigkeit des Decodierens des Formatdatums auf F5 angibt. Diese Abschätzung kann in Betracht gezogen werden zum Decodieren der Daten. D. h., wenn beispielsweise Zweifel bestehen, ob das Formatdatum den Wert 0 hat, kann dies berücksichtigt werden während des Decodierens der Daten durch Zuweisen einer geringeren Zuverlässigkeit zu den vier Extrabits. Beispielsweise ist die Zuverlässigkeit der extra vier Bits dann die Kombination ihrer individuellen Zuverlässigkeit und der Zuverlässigkeit des Formatdatums. Bei der Dekodierung können gängige Soft-Decision Dekodierer verwendet werden, beispielsweise Viterbi-Dekodierer oder Turbo-Dekodierer. Diese Dekodierer berücksichtigen nicht nur den Wert eines Eingangsbits, sondern auch dessen Verlässlichkeit. Die Verlässlichkeit wird dabei typischerweise aus der Demodulation gewonnen, beispielsweise durch Vergleich des Abstandes des empfangenen Modulationswertes von den erwarteten Möglichkeiten an Modulationswerten, wobei zusätzlich noch eine Abschätzung des Rauschens berücksichtigt werden kann. Im Wesentlichen ist die Verlässlichkeit ein Maß für die Wahrscheinlichkeit, dass ein Eingangsbit den Wert hat, der bei der Demodulation bestimmt wurde.

Die Gesamt-Verlässlichkeit für die Dekodierung im vorliegenden Ausführungsbeispiel setzt sich nun bspw. aus der Verlässlichkeit für das betrachtete Extrabit zusammen und der Verlässlichkeit der Bestimmung des Formatdatums. Nur wenn beide mit hoher Verlässlichkeit bestimmt werden konnten, wird das Extrabit als Bit mit hoher Verlässlichkeit für die Dekodierung verwendet. Andernfalls wird das Extrabit nur als Bit mit kleiner Verlässlichkeit für die Dekodierung verwendet.

Beispielsweise kann man eine Verlässlichkeit bestimmen durch eine geeignete Kombination (z.B. ein gewichtetes Mittel) aus der Verlässlichkeit des betrachteten Extrabits und der Verlässlichkeit der Bestimmung des Formatdatums.

Bemerkt wird, dass, wenn das Formatdatum den Wert 0 hat, und der Wert irrtümlicherweise als Wert 1 decodiert wird, dann die vier physikalischen Bits so angesehen wären, als wären sie nicht vorhanden. Jedoch sollten die Verfahren, die sich auf Steuerdaten bzw. physikalischen Bits verlassen, so robust entworfen sein, dass sie mit solchen Situationen fertig werden, weil Signalisierung auf der Bitübertragungsschicht nie besonders zuverlässig ist. Der Nachteil einer potentiell falschen Bestimmung ist also kein prinzipieller Nachteil, da eine potentiell falsche Bestimmung immer möglich ist und somit die Verfahren ohnehin darauf ausgelegt werden müssen.

Als eine weitere Optimierung kann für die physikalischen Bits auch die Zuverlässigkeit bzw. spezieller die Kombination der Zuverlässigkeit des Formatdatums und die Zuverlässigkeit der einzelnen physikalischen Bits berücksichtigt werden. Das Vorgehen ist dabei ähnlich zur oben bereits beschriebenen Behandlung der Datenbits. Bei der Bestimmung eines physikalischen Bits, insbesondere bei der Bestimmung seiner Verlässlichkeit wird sowohl die Verlässlichkeit des physikalischen Bits als auch des Formatdatums berücksichtigt, um daraus eine kombinierte Verlässlichkeit zu berechnen. In diesem Fall kann es nicht nur zwei Eigenschaften abhängig von einem physikalischen Bit geben mit dem Wert 1 oder 0, sondern es können auch Zwischeneigenschaften festgelegt werden. Nach dem Empfang eines "unsicheren" Bits. Beispielsweise können abhängig von der aktuellen Zuverlässigkeit auch mehrere Verfahrensoptionen bestehen nach dem Empfangen eines solchen Bits: Wenn das Bit als sehr zuverlässig erkannt wird, so wird die zugeordnete Aktion durchgeführt. Wenn es aber als unzuverlässig erkannt wird, so kann eine andere Aktion durchgeführt werden. Beispielsweise könnte es sich bei dem physikalischen Bit um ein ACK-Signal handeln. Wenn dieses Signal unsicher empfangen wurde, so kann das zugehörige Datenpaket nochmals wiederholt werden, um sicher zu stellen, dass es korrekt übertragen wurde. Es kann dann sein, dass das Paket unnötiger Weise wiederholt übertragen wurde, was aber häufig besser ist, als wenn es fälschlich nicht wiederholt würde, da letzteres einem Paketverlust gleichkommt der, zumindest bei einigen Anwendungen, gravierender ist als ein durch die unnötige Wiederholung etwas geringerer Datendurchsatz.

In einem weiteren Ausführungsbeispiel wird bei zumindest zwei Werten des Formatdatums die Anzahl und Position der physikalischen Bits gleich gewählt, die Bedeutung aber unterschiedlich, z.B. ACK oder CQI. Dann hat eine falsche Bestimmung des Formatdatums keine nachteiligen Auswirkungen auf die Nutzdatendetektion, da beides Mal die gleiche Anzahl von Daten an der gleichen Stelle verarbeitet wird. Es ergibt sich lediglich eine Fehldetektion der physikalischen Bit, die aber, wie oben ausgeführt, weniger gravierend da ohnehin nicht vermeidbar ist.

Bei einer Variante wird ein Teil der Nutzdaten an eine andere Stelle verschoben, bspw. die Nutzdatenbits N12 bis N15 von den Bitpositionen BP17 bis BP20 in der Bitfolge BF6 zu Bitpositionen BP2 bis BP5 in der Bitfolge BF7. An den Bitpositionen N12 bis N15 der Bitfolge BF7 befinden sich dann bspw. andere Daten, z. B. Steuerdaten.

Bei einer weiteren Variante bleibt ein Teil der Nutdatenbitpositionen fest, der nicht am Anfang der Nutzdaten liegt, bspw. ein Teil der ab der Bitposition N5 beginnt. Die Bitpositionen N1 bis N4 der Daten D5 entsprechen dann bspw. den Bitpositionen BP2 bis B5 der Daten D6. An den Bitpositionen BP6 bis BP9 der Bitfolge BF7 werden dann andere Daten übertragen, z. B. Steuerdaten.

Die an Hand der Figuren 7 und 8 erläuterten Ausführungsbeispiele lassen sich auch unabhängig von dem Formatdatum F5 durchführen, bspw. wenn die Änderung des Formats über höhere Protokollschichten signalisiert wird oder auf andere Art und Weise.

Zusammenfassend gilt, dass ein spezielles Konzept angegeben wurde, um ein kleines PAPR beizubehalten und trotzdem ein flexibles, zukunftsweisendes Zeitschlitzformat für die physikalische Schicht anzugeben. Ein kleines PAPR ist erforderlich für weitere Entwicklungen von beispielsweise UMTS, wobei gleichzeitig eine große Flexibilität hinsichtlich der physikalischen Signalisierung in einem Zeitrahmen TTI gegeben sein soll.

Es wird ein Formatdatum eingeführt, das Steuerdaten betrifft, was im Gegensatz zu beispielsweise dem erwähnten Nutzdatenkennzeichen TFCI ist, das sich auf eine höhere Transportschicht bezieht.

Die physikalische Signalisierung soll schnell sein und wird deshalb vorzugsweise nicht oder nur gering gesichert. So sind Rahmenfehlerraten von 10⁻⁶ typischerweise nicht erreichbar, typische Werte liegen im Bereich von 0,1 bis 0,001. Für Nutzdaten ist meist eine kleinere Fehlerwahrscheinlichkeit wünschenswert. Jedoch gibt es das Risiko, dass, wenn das Formatdatum falsch decodiert wird, dass die Daten gleichfalls falsch detektiert werden. Ebenso wie die Nutzdatenkennzeichenleistungsfähigkeit die Bitfehlerrate beim UMTS begrenzt, abgesehen von dem Fall, in dem das Nutzdatenkennzeichen TFCI1 mit einer signifikant größeren Leistung übertragen wird. Dieses Dilemma kann gelöst werden, wenn die Daten immer an dem gleichen Minimumdatenfeld übertragen werden, das resultiert, wenn das physikalische Format übertragen wird, das die kleinste Anzahl von Datenbits ermöglicht. Für die anderen Werte des Formatdatums können dann mehr Datenbits übertragen werden. Diese Bits tragen dann zusätzliche Datenbits und liegen beispielsweise in Bitpositionen, die vor den Bitpositionen oder nach den Bitpositionen liegen, in denen das Minimumdatenfeld übertragen wird.

Außerdem wird durch die Erfindung eine multi-code Datenübertragung vermieden.

### Bezugszeichenliste

- 10: Mobilfunknetz
- M: Mobilfunkgerät
- 20: Antenne
- UL: Uplink
- DL: Downlink
- BS: Basisstation
- 30: Antenne
- 31: Datenübertragungsnetz
- 32 bis 38: Beginn von Nutzdaten
- F1 bis F3: Formatdatum
- P1 bis P4b: Pilotdaten
- ACK: Bestätigungsdatum
- TPC1 bis TPC3: Leistungsdatum
- TFCI: Nutzdatenkennzeichen
- D1 bis D6a: Nutzdaten
- 50 bis 56: Daten
- BP1 bis BPn: Bitposition
- 60: Koordinatensystem
- 62: x-Achse
- 64: y-Achse
- 66: Leistungskurve
- BF1 bis BF7: Bitfolge
- S1, S2: Steuereinheit
- N1 bis N15: Nutzdatenbitpositionen

## Patentansprüche

1. Verfahren zum Signalisieren des Auftretens oder der Lage eines Steuerdatums (ACK) in einer Bitfolge (BF1), mit den Schritten:
mit einer ersten Vorrichtung (M; BS) Senden einer ersten Bitfolge (BF1), die ein erstes Formatdatum (F1) mit einem ersten Wert enthält, der angibt, dass oder wo die erste Bitfolge (BF1) ein erstes Steuerdatum enthält,
Senden des ersten Steuerdatums (ACK) in der ersten Bitfolge (BF1),
Empfangen der ersten Bitfolge (BF1) in einer zweiten Vorrichtung (BS; M),
Lesen des Formatdatums (F1),
mit Hilfe des Formatdatums (F1) Ermitteln der Lage des ersten Steuerdatums und Lesen des ersten Steuerdatums (ACK), Erbringen einer Steuerfunktion (S2; S1) in der zweiten Vorrichtung (BS; M) abhängig von dem Wert des Steuerdatums (ACK).

2. Verfahren nach Anspruch 1, **gekennzeichnet durch** den Schritt:
mit der ersten Vorrichtung (M) Senden einer zweiten Bitfolge (BF2), die ein zweites Formatdatum mit einem zweiten Wert enthält, der angibt, dass in der zweiten Bitfolge (BF2) bezüglich der Steuerfunktion kein weiteres Datum enthalten ist.

3. Verfahren nach Anspruch 1 oder 2, **dadurch gekennzeichnet, dass** die Steuerfunktion eine Bestätigungsfunktion (ACK) ist, die den Empfang eines Datenpaketes in der ersten Vorrichtung bestätigt durch Senden des Steuerdatums (ACK), oder
dass die Steuerfunktion den Zugriff auf Nutzdaten betrifft abhängig vom Steuerdatum (TFCI), oder
dass die Steuerfunktion die Übertragung zusätzlicher Pilotdaten betrifft, die zusätzlich zu weiteren Pilotdaten in der Bitfolge (BF1, BF2) übertragen werden, oder
dass die Steuerfunktion die Auswahl eines Übertragungsverfahrens abhängig von Empfangsqualitätsdaten (CQI) ist.

4. Verfahren nach Anspruch 1, **gekennzeichnet durch** den Schritt:
mit der ersten Vorrichtung (M) Senden einer zweiten Bitfolge (BF2), die ein zweites Formatdatum (F2a) mit einem zweiten Wert enthält, der angibt, dass in der zweiten Bitfolge (BF2)
bezüglich der Steuerfunktion ein zweites Steuerdatum mit einer anderen Lage in der zweiten Bitfolge (BF2) enthalten ist, verglichen mit der Lage des ersten Steuerdatums in der ersten Bitfolge (BF1).

5. Verfahren nach Anspruch 1 oder Anspruch 4, **dadurch gekennzeichnet, dass** die Steuerfunktion den Zugriff auf Nutzdaten in der ersten Bitfolge (BF1) oder in einer dritten Bitfolge betrifft.

6. Verfahren nach Anspruch 5, **dadurch gekennzeichnet, dass** das erste Steuerdatum (TFCI1) einen Wert hat, der eine erste Anordnung der Nutzdaten (D1) in der ersten Bitfolge (BF1) oder in der dritten Bitfolge angibt,
und wobei bei Rückbezug auf Anspruch 4 das zweite Steuerdatum (TFCI3) einen Wert hat, der eine von der ersten Anordnung (32, 34) verschiedene Anordnung (40, 42) der Nutzdaten (D3) in der zweiten Bitfolge (BF3) oder in einer vierten Bitfolge angibt, wobei vorzugsweise an der gleichen Position (32, 40) in der ersten Bitfolge (BF1) und der zweiten Bitfolge (BF2) oder in der dritten Bitfolge und der vierten Bitfolge mit den Nutzdaten begonnen wird.

7. Verfahren nach Anspruch 1 oder 4, **dadurch gekennzeichnet, dass** die Steuerfunktion die Bearbeitung von Pilotdaten (P1) betrifft, wobei das Steuerdatum Pilotdaten (P1) enthält, die zur Entzerrung der ersten Bitfolge (BF1) in der zweiten Vorrichtung (BS) verwendet werden.

8. Verfahren nach Anspruch 1 oder 4, **dadurch gekennzeichnet, dass** die Steuerfunktion das Festlegen eines Übertragungsverfahrens betrifft, wobei der Wert des Steuerdatums (CQI) die Empfangsqualität in der ersten Vorrichtung (M) angibt.

9. Verfahren nach einem der vorhergehenden Ansprüche, **dadurch gekennzeichnet, dass** die erste Vorrichtung eine Mobilstation (M) und die zweite Vorrichtung eine Basisstation (BS) in einem Mobilfunknetz (10) ist, oder
dass die erste Vorrichtung eine Basisstation (BS) und die zweite Vorrichtung eine Mobilfunkstation (M) in einem Mobilfunknetz (10) ist.

10. Verfahren nach einem der vorhergehenden Ansprüche, **dadurch gekennzeichnet, dass** das Formatdatum (F1 bis F5) eine Länge kleiner als fünf Bit hat.

11. Verfahren nach einem der vorhergehenden Ansprüche, **dadurch gekennzeichnet, dass** die erste Bitfolge (BF1) Nutzdaten (D1) enthält und dass die Steuerfunktion in der zweiten Vorrichtung erbracht wird, bevor die Nutzdaten (D1) decodiert werden.

12. Verfahren nach einem der vorhergehenden Ansprüche, **dadurch gekennzeichnet, dass** die erste Bitfolge (BF1) in einem Zeitmultiplexrahmen (TTI) übertragen wird.

13. Verfahren nach einem der vorhergehenden Ansprüche, **dadurch gekennzeichnet, dass** die erste Bitfolge (BF1) mit einem CDMA-Verfahren oder mit einem OFDM-Verfahren oder mit einem SC-FDMA-Verfahren übertragen wird.

14. Verfahren nach einem der vorhergehenden Ansprüche, **dadurch gekennzeichnet, dass** das Formatdatum (F1 bis F5) mit einer Rahmenfehlerrate im Bereich von 0,1 bis 0,001 übertragen wird.

15. Verfahren nach einem der vorhergehenden Ansprüche soweit auf Anspruch 4 rückbezogen, **dadurch gekennzeichnet, dass** die erste Bitfolge (BF6) eine erste Nutzdatenfolge (D5) enthält, und dass die zweite Bitfolge (BF7) eine zweite Nutzdatenfolge (D6, D6a) enthält,
wobei in der ersten Bitfolge (BF6) ein Abschnitt (N1, N2) der ersten Nutzdatenfolge (D5) in einer Lage (BP6, BP7) liegt, in der in der zweiten Bitfolge (BF7) der gleiche Abschnitt (N1, N2) der zweiten Nutzdatenfolge (D6, D6a) liegt,
und wobei entweder a):
und wobei entweder a) :
ein anderer Abschnitt (N12 bis N15) der ersten Nutzdatenfolge (D5) in der ersten Bitfolge (BF6) an einer anderen Lage (BP17 bis BP20) liegt als der gleiche Abschnitt (N12 bis N15) der zweiten Nutzdatenfolge (D6) in der zweiten Bitfolge (BF7),
oder wobei alternativ b):
die zweite Nutzdatenfolge (N6, N6a) zusätzliche oder doppelt vorhandene Nutzdaten (N6a) im Vergleich zu der ersten Nutzdatenfolge (N5) enthält,
und wobei die zusätzlichen oder doppelt vorhandenen Nutzdaten (N6a) oder ein Teil der zusätzlichen oder doppelt vorhandenen Nutzdaten (N6a) in der zweiten Bitfolge (BF7) vor dem genannten Abschnitt (N1, N2) liegen.

16. Verfahren zum Übertragen von Nutzdaten (D5, D6), umfassend die folgenden Schritte:
mit einer ersten Vorrichtung (M; BS) Senden einer ersten Bitfolge (BF6), die eine erste Nutzdatenfolge (D5) enthält,
mit der ersten Vorrichtung (M) Senden einer zweiten Bitfolge (BF7), die eine zweite Nutzdatenfolge (D6, D6a) enthält,
wobei in der ersten Bitfolge (BF6) ein Abschnitt (N1, N2) der ersten Nutzdatenfolge (D5) in einer Lage liegt, in der in der zweiten Bitfolge (BF7) der gleiche Abschnitt (N1, N2) der zweiten Nutzdatenfolge (D6) liegt, und wobei entweder a):
ein anderer Abschnitt (N12 bis N15) der ersten Nutzdatenfolge (D5) in der ersten Bitfolge (BF6) an einer anderen Lage (BP17 bis BP20) liegt als der gleiche Abschnitt (N12 bis N15) der zweiten Nutzdatenfolge (D6) in der zweiten Bitfolge (BF7), oder wobei alternativ b):
die zweite Nutzdatenfolge (N6, N6a) zusätzliche oder doppelt vorhandene Nutzdaten (N6a) im Vergleich zu der ersten Nutzdatenfolge (N6) enthält,
und wobei die zusätzlichen oder doppelt vorhandenen Nutzdaten (N6a) oder ein Teil der zusätzlichen oder doppelt vorhandenen Nutzdaten (N6a) in der zweiten Bitfolge (BF7) vor dem genannten Abschnitt (N1, N2) liegen.

17. Vorrichtung (M, BS),
mit einer Steuereinheit (S1, S2), die das Erzeugen einer ersten Bitfolge (BF1) steuert,
die erste Bitfolge (BF1) enthält ein Formatdatum (F1) mit einem ersten Wert, der angibt, dass die erste Bitfolge (BF1) ein erstes Steuerdatum enthält,
und mit einer Sendeeinheit (20, 30), die die erste Bitfolge (BF1) sendet.

18. Vorrichtung (M, BS),
mit einer Empfangseinheit (20, 30), die eine erste Bitfolge (BF1) empfängt,
die erste Bitfolge enthält ein Formatdatum (F1) mit einem ersten Wert, der angibt, dass die erste Bitfolge (BF1) ein erstes Steuerdatum (ACK) enthält,
und mit einer Steuereinheit (S1, S2), die mit Hilfe des Formatdatums (F1) das Steuerdatum (ACK) liest und die abhängig vom Wert des Steuerdatums (ACK) eine Steuerfunktion erbringt.

19. Vorrichtung (M, BS) nach Anspruch 17 oder 18 mit einer Einheit zum Durchführen eines Verfahrensschrittes eines Verfahrens nach einem der Ansprüche 1 bis 16.

20. Vorrichtung (M; BS),
mit einer Sendeeinheit und/oder einer Empfangseinheit,
und mit einer Steuereinheit, wobei die Steuereinheit im Betrieb das Senden oder Bearbeiten einer ersten Bitfolge (BF6) veranlasst, die eine erste Nutzdatenfolge (D5) enthält,
und wobei die Steuereinheit im Betrieb das Senden oder Bearbeiten einer zweiten Bitfolge (BF7), die eine zweite Nutzdatenfolge (D6, D6a) enthält,
wobei in der ersten Bitfolge (BF6) ein Abschnitt (N1, N2) der ersten Nutzdatenfolge (D5) in einer Lage (BP6, BP7) liegt, in der in der zweiten Bitfolge (BF7) der gleiche Abschnitt (N1, N2) der zweiten Nutzdatenfolge (D6, D6a) liegt, und wobei entweder a):
ein anderer Abschnitt (N12 bis N15) der ersten Nutzdatenfolge (D5) in der ersten Bitfolge (BF6) an einer anderen Lage (BP17 bis BP20) liegt als der gleiche Abschnitt (N12 bis N15) der zweiten Nutzdatenfolge (D6) in der zweiten Bitfolge (BF7), oder wobei alternativ b):
die zweite Nutzdatenfolge (N6, N6a) zusätzliche oder doppelt vorhandene Nutzdaten (N6a) im Vergleich zu der ersten Nutzdatenfolge (D5) enthält,
und wobei die zusätzlichen oder doppelt vorhandenen Nutzdaten (N6a) oder ein Teil der zusätzlichen oder doppelt vorhandenen Nutzdaten (N6a) in der zweiten Bitfolge (BF7) vor dem genannten Abschnitt (N1, N2) liegen.
